**Europäisches Patentamt**

**European Patent Office**

**Office européen des brevets**

(11) Publication number : **0 162 823 B2**

# (12) NEW EUROPEAN PATENT SPECIFICATION

(45) Date of publication of the new patent specification : **05.08.92 Bulletin 92/32**

(51) Int. Cl.⁵ : **B60B 39/00**

(21) Application number : **85850142.2**

(22) Date of filing : **26.04.85**

(54) Anti-skid device.

(30) Priority : **27.04.84 SE 8402335**

(43) Date of publication of application :
**27.11.85 Bulletin 85/48**

(45) Publication of the grant of the patent :
**09.03.88 Bulletin 88/10**

(45) Mention of the opposition decision :
**05.08.92 Bulletin 92/32**

(84) Designated Contracting States :
**AT BE CH DE FR GB IT LI LU NL SE**

(56) References cited :
**AU-A- 156 596**
**DE-A- 266 487**

(56) References cited :
**DE-A- 2 914 366**
**DE-U- 8 324 979**
**FR-A- 2 159 709**
**US-A- 1 223 070**
**US-A- 2 264 466**
**US-A- 2 886 138**

(73) Proprietor : **ONSPOT AB**
**Box 1063**
**S-581 10 Linköping (SE)**

(72) Inventor : **Andersson, Olle**
**Garvaregatan 12**
**S-582 53 Linköping (SE)**

(74) Representative : **Onn, Thorsten et al**
**AB STOCKHOLMS PATENTBYRA Box 3129**
**S-103 62 Stockholm (SE)**

EP 0 162 823 B2

Jouve, 18, rue Saint-Denis, 75001 PARIS

## Description

This invention is related to so-called automatic anti-skid devices as specified in the preamble of claim 1, as disclosed for example in US-A-2 264 466 and FR-A-2 159 709. Automatic means in this case not that they are activated automatically when driving condition turns slippery, but instead that they can be activated by the driver when the vehicle is moving. Anti-skid devices of this kind have been known comparatively long time and include in the only one yet successfully marketed model that short, on a pulley arranged pieces of chain by the rotation of pulley when this is brought in contact with a vehicle wheel are thrown in under this. This type of anti-skid device requires however, for its mounting much space, which in turn means that one has not been able to use it in buses, where the need is well as great as on trucks and lorries. The reason for this is that the air suspension used by most buses today also consumes very much space, leaving too little space for the known device. In particular it is necessary for anti-skid devices of this kind that the resting position of the pulley is comparatively high up from the ground, this since the chains, when the pulley is not rotated, is suspended vertically down from this and they may not touch the ground in this position of the pulley. Apart from this the known devices are also provided with a space consuming mechanism providing the movement from the resting position to the working position in contact with the vehicle wheel.

With the above problems in view the object of the invention is to provide a compact and adaptable anti-skid device, well suited for mounting. on for instance buses and other vehicles, where available space is limited.

The above object is in accordance with the invention solved by the features specified in claim 1. The inventive anti-skid device is provided with a shelf, under the parking location of the chain provided pulley so that the shelf will collect and hold up the chains when a lateral movement of the chain provided pulley brings this in over the shelf. The chain pieces are thus prevented from contact with the ground even though the distance between the pulley in its resting position and the ground is less than the length of the Chains. In this way the necessary height for the invented device is efficiently reduced.

In order to enhance the use of the available space an embodiment of the invention provides in accordance with a further characteristic a possibility of locating the parking or resting position of the pulley as well as the chain supporting shelf a long distance from the working position. This is achieved by connecting a chain pulley carrying arm at its inner end with a pulley, which in turn is connected by bowden-wires to an air cylinder as well as a spring for the.return movement. The spring can be a gas spring or of course also an air cylinder. In this way it is possible for the chain pulley carrying arm to carry out a movement in excess of 180°, making it possible to place the resting location of the chain pulley a long way from the vehicle wheel without increase in arm length.

In some cases (double mounted wheels) it may however be necessary to provide arms that are so long that the chain provided pulleys, when moved from resting positions to working positions, will come in contact with each other. In accordance with a further embodiment of the invention any fouling contact is prevented by choking the air connections for one of the air cylinders. In this way the pressure will build up and fall faster in the other cylinder when activated or deactivated. The choked side will always be slower and the critical possible contact point will be passed at different times.

The pulley or pulleys for the bowden-wires to spring and manoeuvring cylinder may be eccentric in order to ensure maximum forces for the contact of the chain provided pulley with the vehicle wheel as well as at the parking location. The providing of an air spring has the advantage of giving a full force even in the retracted position.

The shelf is preferably made of a resilient low-friction material, for instance plastic and may of course be constituted by a flat shelf or have a moulded shape with lateral up drawn edges, in order to keep the chains from contact with the ground.

As is easily understood from the above the air cylinder as well as the spring can be'placed anywhere where there is space available since force and movement are transferred via the bowden-cables.

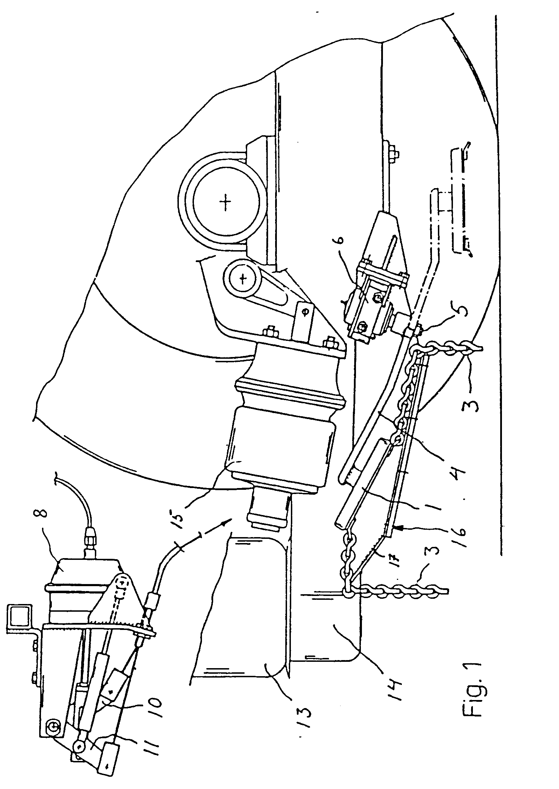

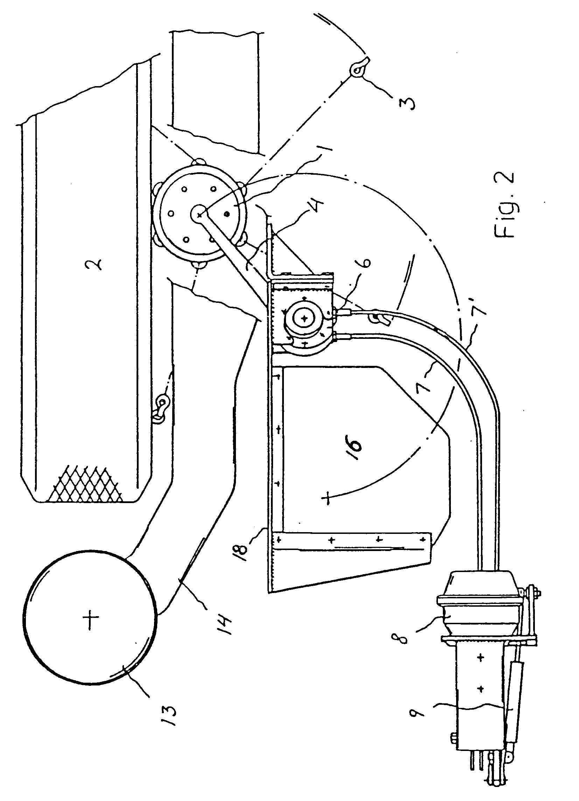

Further details and features of the invention will be apparent from the following description of a preferred embodiment shown in the drawings. Fig. 1 shows the device in accordance with the invention seen from the side and Fig. 2 the same device seen from above.

In Fig. 2 the device in accordance with the invention is shown with the chain provided pulley 1 in its working position in contact with the vehicle wheel 2. The rest or parking location of the chain provided pulley is shown in Fig. 1. The short chain pieces 3 on the chain provided pulley 1 are - when the pulley is rotated - thrown out and receive a movement sequence that is indicated in Fig. 2. The chain provided pulley 1 is journalled in an arm 4, that in turn is fastened to a shaft 5 journalled in a housing 6. The arm is fastened to the shaft 5 at its lower end, and inside the housing a pulley is fixed on the shaft..Fastened to this pulley and extending around this are the ends of bowden-cables 7 and 7'. The other ends of the bowden-cables are connected to an air cylinder 8 and an air spring 9 respectively. The outer flexible pipings of the bowden-cables 7, 7' are fastened in one end to the housing 6 and in the other end to a subframe carrying air cylinder 8 and air spring 9. The subframe is in turn fastened to the vehicle. The couplings between air cylinder 8 and air spring 9 and the respective ends of the cable 7 and 7' are not direct in this case but via lever arms 10 and 11 journalled in the subframe. The pulley is arranged eccentricly on the stub-shaft 5 so that maximum torque from air cylinder and air spring respectively is obtained when the chain provided pulley is in working position or parking position respectively. This in turn means that air cylinder and air spring can be smaller and thus cheaper.

Below the parking position of the chain provided pulley 1 a shelf 16 is provided, fabricated from a plastic low friction material, for instance polyurethane. The housing 6 and the shelf 16 are connected to a supporting frame 18 that in turn is fastened to the vehicle.

As can be seen in particular from Fig. 1 the shelf 16 is arranged relatively closely under the chain provided pulley 1 in its parking position and the intermediate space is only enough for the chains. In this way the chains 3 will be out from the shelf 16 when the device is activated.

The shelf 16 is more horizontal than the chain provided pulley 1 and the chains 3 hang over the edge of the shelf. The shelf 16 is on two sides restricted by the frame 18 and an angled edge extension 17. If the chains by the rotation of the chain provided pulley when brought to the parking position are thrown over the edge extension 17, this is no problem since the chains on activation are moved essentially parallel to this edge. In case the shelf is moulded from high molecular plastic the edge extension may of course be integral with the shelf, which may also be given a bowl-shape.

To indicate the space restrictions the air cylinder 13, suspension beam 14 and the brake cylinder 15 are shown.

## Claims

1. Anti-skid device incorporating a chain provided pulley (1) that when used is brought from a parking location to a working position in contact with the side of a vehicle wheel (2) for sequential throwing of the chains (3) in under the vehicle wheel (2) when the chain provided pulley (1) is rotated as a result of the contact with the vehicle wheel, characterized in that the movement of the chain provided pulley (1) from its working position to its parking position is essentially lateral and that the chain provided pulley (1) at its resting location has a shelf (16) arranged under it, the shelf (16) being rigidly fastened to a frame (18) of the vehicle, the shelf (16) being wider than the chain provided pulley (1) so that the shelf collects or draws up the chains (3) when the chain provided pulley (1) is parked so that the chains (3) are prevented from hanging down and on the ground also when the parking location of the chain provided pulley (1) is closer to the ground than the length of the chain pieces.

2. Device according to claim 1 characterized in that an arm (4) carrying the chain provided pulley (1) is journalled to the frame (18).

3. Device according to claim 2 characterized in that movement means for the chain provided pulley (1) include the arm (4) carrying the chain provided pulley (1) at one end and a further pulley (in housing 6) journalled to the other end the further pulley being connected to manoeuvring and retraction means (g) by one or two cables running via flexible pipings in the form of bowden-cables (7, 7').

4. Device according to claim 3 characterized in that the means is an air cylinder (8) manoeuvering and that the retraction means is an air spring (9).

5. Device according to claim 3 or 4 characterized in that the further pulley (in housing 6) is arranged eccentrically so that the force from the cable (7, 7') is essentially giving the most torque in the wheel contact position of the chain provided pulley (1) and at the same time the torque given from the force from the air spring (9) is minimum, and that the relations are reversed in the parking position.

6. Device according to claims 4 or 5 characterized in that the connection to the air cylinder (8) on one side of the vehicle is slightly choked resulting in a slower movement for the arm (14) of the corresponding side, enabling long arms without risk of the fouling of these against each other.

## Patentansprüche

1. Gleitschutzvorrichtung mit einer mit Ketten versehenen Rolle (1), die bei Anwendung von einer Parkstellung in eine Arbeitsstellung in Kontakt mit der Seite eines Fahrzeugrades (2) gebracht wird, um die Ketten (3) aufeinanderfolgend unter das Fahrzeugrad (2) zu schleudern, wenn die mit Ketten versehenen Rolle (1) als Folge des Kontakts mit dem Fahrzeugrad gedreht wird, dadurch gekennzeichnet, daß die Bewegung der mit Ketten versehenen Rolle (1) von ihrer Arbeitsstellung in ihre Parkstellung im wesentlichen seitlich gerichtet ist, und daß die mit Ketten versehene Rolle (1) in ihrer Parkstellung über einer Platte (16) angeordnet ist, wobei die Platte (16) starr an einem Rahmen (18) des Fahrzeugs befestigt und die Platte (16) breiter als die mit Ketten versehene Rolle (1) ist, so daß die Platte die Ketten (3) sammelt oder aufzieht, wenn die mit Ketten versehene Rolle (1) geparkt ist, so daß verhindert wird, daß die Ketten (3) nach unten und auf den Boden hängen, auch wenn sich die mit Ketten versehene Rolle (1) in der Parkstellung näher am Boden befindet als die Kettenstücke lang sind.

2. Vorrichtung nach Anspruch 1, dadurch gekennzeichnet, daß ein die mit Ketten versehene Rolle (1) tragender Arm (4) am Rahmen (18) gelagert ist.

3. Vorrichtung nach Anspruch 2, dadurch gekennzeichnet, daß eine Bewegungseinrichtung für die mit Ketten versehene Rolle (1) den die mit Ketten versehene Rolle (1) an einem Ende tragenden Arm (4) und eine weitere Rolle (im Gehäuse 6) umfaßt, die am anderen Ende gelagert ist, wobei die weitere Rolle mittels eines oder zweier über flexible Rohrleitungen in Form von Bowdenzügen (7, 7') geführter Kabel mit einer Betätigungs- und Rückführeintichtung (g) verbunden ist.

4. Vorrichtung nach Anspruch 3, dadurch gekennzeichnet, dass das Bewegungsmittel ein Luftzylinder (8) ist und dass das Rückführungsmittel eine Luftfeder (9) ist.

5. Vorrichtung nach Anspruch 3 oder 4, dadurch gekennzeichnet, dass die Rolle (im Gehäuse 6) exzentrisch angeordnet ist, so dass die Kraft vom Kabel (7, 7') wesentlich das grösste Drehmoment in der Radkontaktlage der mit Ketten versehenen Rolle (1) gibt, wobei gleichzeitig das von der Luftfeder (9) gegebene Kraft minimal ist, und dass die Beziehungen in der Parkstellung umgekehrt sind.

6. Vorrichtung nach einem der vorhergehenden Ansprüche dadurch gekennzeichnet, dass die Verbindung mit dem Luftzylinder (8) an der einen Seite des Fahrzeugs etwas gedrosselt ist, was eine langsamere Bewegung des Arms (4) an der entsprechenden Seite zur Folge hat und lange Arme ohne das Risiko einer Kollision dieser miteinander ermöglicht.


**Revendications**

1. Dispositif antidérapant, comprenant une poulie (1) pourvue d'une chaîne qui, lors de l'utilisation, est amenée d'une situation de stationnement dans une position de travail au contact avec le côté d'une roue de véhicule (2) pour la jetée séquentielle des chaînes (3) sous la roue de véhicule (2), lorsque la poulie (1) pourvue de la chaîne est entraînée en rotation par suite du contact avec la roue de véhicule, caractérisé en ce que le mouvement de la poulie (1) pourvue de la chaîne, de sa position de travail à sa position de stationnement, est essentiellement latéral et que la poulie (1) pourvue de la chaîne, dans sa position de repos, présente un plateau (16) disposé sous celle-ci, le plateau (16) étant fixé rigidement à un châssis (18) du véhicule, le plateau (16) étant plus large que la poulie (1) pourvue de la chaîne, de sorte que le plateau collectionne ou remonte les chaînes (3) lorsque la poulie (1) pourvue de la chaîne est parquée de façon que les chaînes (3) soient empêchées de pendre vers le bas et sur le sol, également lorsque l'emplacement de stationnement de la poulie (1) pourvue de la chaîne est plus proche du sol que la longueur des pièces de chaîne.

2. Dispositif selon la revendication 1, caractérisé en ce qu'un bras (4) supportant la poulie (1) pourvue de la chaîne, est fixé au châssis (18).

3. Dispositif selon la revendication 2, caractérisé en ce que des moyens de mouvement de la poulie (1) pourvue de la chaîne comprennent le bras (4) supportant la poulie (1) pourvue de la chaîne à une extrémité et une autre poulie (dans le logement 6), fixée à l'autre extrémité, l'autre poulie étant reliée à des moyens de manoeuvre et de rétraction (9) par un ou deux câbles s'étendant via des tuyaux flexibles en forme de câbles de Bowden (7, 7').

4. Dispositif selon la revendication 3, caractérisé en ce que l'organe de déplacement est un cylindre à air (8) et que l'organe de rappel est un ressort à air (9).

5. Dispositif selon l'une des revendications 3 et 4, caractérisé en ce que le galet inclus dans le boîtier (6) est disposé excentriquement, de manière que la force transmise par le câble (7, 7') fournisse sensiblement le couple le plus élévé dans la position où le galet (1) à chaînes se trouve en contact avec la roue, le couple fourni par la force en provenance du ressort à air (9) étant en même temps au minimum, et que les rapports sont inversés dans la position de repos.

6. Dispositif selon une quelconque des revendications précédentes, caractérisé en ce que la connexion au cylindre à air (8) de l'un des côtés du véhicule est légèrement étranglée de manière à rendre plus lent le déplacement du bras (4) du côté correspondant, permettant ainsi l'utilisation de bras longs sans risquer qu'ils se heurtent l'un à l'autre.

Fig. 1

Fig. 2